# EUROPEAN PATENT APPLICATION

(11) **EP 4 819 615 A1**
(43) Date of publication of application: **07.10.2026**
(21) Application number: 24896065.0
(22) Date of filing: 21.10.2024
(51) Int. Cl.: H04N 21/431, H04N 21/478

(54) **LIVE-STREAMING ROOM RECOMMENDATION METHOD AND APPARATUS, AND MEDIUM AND ELECTRONIC DEVICE**

(30) Priority: 30.11.2023 CN 202311631460
(71) Applicant: BEIJING YOUZHUJU NETWORK TECHNOLOGY CO. LTD., Beijing 101299 (CN)
(72) Inventor: LIU, Mengmeng, Beijing 100028 (CN); HU, Jiali, Beijing 100028 (CN); XIE, Zhiyao, Beijing 100028 (CN)
(74) Representative: Marks & Clerk LLP
(86) International application number: PCT/CN2024/126052
(87) International publication number: WO 2025/112972

(57) **Abstract**

The present disclosure relates to the technical field of computers, and relates to a live-streaming room recommendation method and apparatus, and a medium and an electronic device. The live-streaming room recommendation method comprises: displaying prompt information in a first live-streaming room; in response to a first trigger operation on the prompt information, displaying, in the first live-streaming room, a target page that comprises a second live-streaming room; and then, in response to a second trigger operation on a target second live-streaming room in the target page, displaying the target second live-streaming room. Therefore, a second live-streaming room can be recommended to a user while the user is viewing a live stream, and a second live-streaming room that belongs to the same category as the first live-streaming room can be recommended to the user, without the user exiting the first live-streaming room, such that the second live-streaming room of the same category can be recommended to the user quickly and intuitively in a live-streaming interface of the first live-streaming room, without interrupting the user viewing the first live -streaming room, and thus the first live-streaming room can be directly switched to the second live-streaming room that belongs to the same category, without the user exiting the first live-streaming room.

## Description

The present application claims priority to Chinese Patent Application No. 202311631460.X filed on November 30, 2023, the content of which is incorporated herein in its entirety as a part of the present application.

### TECHNICAL FIELD

The present disclosure relates to a live stream channel recommendation method and apparatus, a medium, and an electronic device.

### BACKGROUND

With the development of the Internet industry, application scenarios of live streaming are becoming more and more extensive. For example, products are recommended to users who watch live streams through live stream e-commerce.

There are a huge number of users broadcasting live on a live stream platform. For users, how to quickly find live stream channels they are interested in when faced with a large number of live stream channels has always been a difficult technical problem. Therefore, how to recommend a live stream channel is a technical problem that needs to be solved urgently.

### SUMMARY

The summary is provided to give a brief overview of concepts, which will be described in detail in the following detailed description of embodiments. The summary is neither intended to identify key or essential features of the claimed technical solutions nor intended to be used to limit the scope of the claimed technical solutions.

According to a first aspect, the present disclosure provides a live stream channel recommendation method, including:
displaying prompt information in a first live stream channel, where the first live stream channel is a live stream channel whose live stream channel attribute information meets a first preset condition;
displaying a target page in the first live stream channel in response to a first trigger operation on the prompt information, where the target page includes a second live stream channel whose live stream channel attribute information meets the first preset condition; and
displaying, in response to a second trigger operation on a target second live stream channel in the target page, the target second live stream channel.

According to a second aspect, the present disclosure provides a live stream channel recommendation apparatus, including:
a first display module, configured to display prompt information in a first live stream channel, where the first live stream channel is a live stream channel whose live stream channel attribute information meets a first preset condition;
a second display module, configured to display a target page in the first live stream channel in response to a first trigger operation on the prompt information, where the target page includes a second live stream channel whose live stream channel attribute information meets the first preset condition; and
a third display module, configured to display a target second live stream channel in the target page in response to a second trigger operation on the target second live stream channel.

According to a third aspect, the present disclosure provides a computer-readable medium having a computer program stored thereon, where the program, when executed by a processing apparatus, causes the steps of the method according to the first aspect to be implemented.

According to a fourth aspect, the present disclosure provides an electronic device, including:
a storage apparatus having a computer program stored thereon; and
a processing apparatus configured to execute the computer program in the storage apparatus to implement the steps of the method according to the first aspect.

The other features and advantages of the present disclosure will be described in detail in the following Detailed Description section.

### BRIEF DESCRIPTION OF DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale. In the accompanying drawings:
FIG. 1 is a flowchart of a live stream channel recommendation method according to some embodiments;
FIG. 2 is a schematic diagram of a first live stream channel according to some embodiments;
FIG. 3 is a schematic diagram of a target page according to some embodiments;
FIG. 4 is a schematic diagram of a target second live stream channel according to some embodiments;
FIG. 5 is a schematic diagram of displaying a first live stream channel according to some embodiments;
FIG. 6 is a schematic diagram of a first live stream channel according to some other embodiments;
FIG. 7 is a schematic diagram of a product display page according to some embodiments;
FIG. 8 is a schematic diagram of a page of a target recommended object according to some embodiments;
FIG. 9 is a schematic structural diagram of a live stream channel recommendation apparatus according to some embodiments; and
FIG. 10 is a schematic structural diagram of an electronic device according to some embodiments.

### DETAILED DESCRIPTION

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be displayed in text. Furthermore, the pop-up window may further include a selection control for the user to choose whether to "agree" or "disagree" to provide the personal information to the electronic device.

It can be understood that the abovementioned process of notifying and obtaining the authorization of the user is only illustrative and does not constitute a limitation on the implementations of the present disclosure, and other manners that satisfy the relevant laws and regulations may also be applied in the implementations of the present disclosure.

Furthermore, it can be understood that the data involved in the technical solutions (including, but not limited to, the data itself and the access to or use of the data) shall comply with the requirements of corresponding laws, regulations, and relevant provisions.

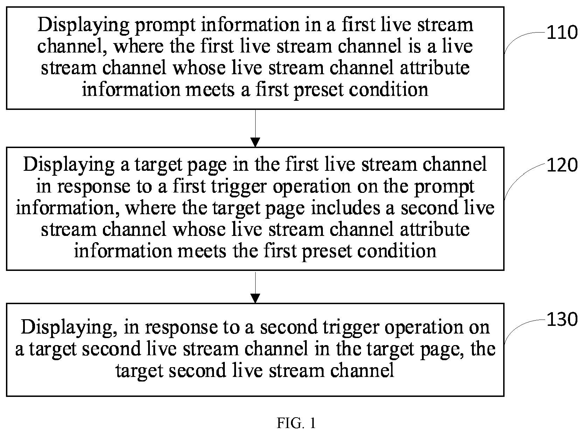

FIG. 1 is a flowchart of a live stream channel recommendation method according to some embodiments. As shown in FIG. 1, an embodiment of the present disclosure provides a live stream channel recommendation method. The method may be performed by an electronic device, specifically by a live stream channel recommendation apparatus. The apparatus may be implemented in the form of software and/or hardware and configured in an electronic device. As shown in FIG. 1, the method may include the following steps.

In step 110, prompt information is displayed in a first live stream channel, where the first live stream channel is a live stream channel whose live stream channel attribute information meets a first preset condition.

Here, the first live stream channel may be a live stream channel currently viewed by a user. The prompt information may be information indicating that the live stream channel attribute information of the first live stream channel meets the first preset condition. The prompt information may be text information, image information, or the like.

In some examples, the live stream channel attribute information may be a type of live stream content in the live stream channel. For example, in a scenario of entertainment live streaming, depending on live stream content, types corresponding to live stream channels may be outdoor live streaming, game live streaming, talent show live streaming, and the like.

Accordingly, that the live stream channel attribute information meets the first preset condition may mean that a type of the live stream channel is a target type. The target type may be a preconfigured type of a live stream channel. The prompt information is displayed in the first live stream channel if a type corresponding to the first live stream channel is the target type.

In some other examples, the live stream channel attribute information may be a service type corresponding to the live stream channel. The service type corresponding to the live stream channel may be an activity type to which the live stream channel belongs. For example, in a live stream e-commerce scenario, depending on different recommended objects in live stream channels, the service types corresponding to the live stream channels may include a service type of "selected products session", a service type of "domestic products session", a service type of "low-price products session", and the like.

Accordingly, that the live stream channel attribute information meets the first preset condition may mean that the service type corresponding to the live stream channel is a target service type. The target service type may be a preconfigured service type. The prompt information is displayed in the first live stream channel if the service type of the first live stream channel is the target service type. For example, when the user views a first live stream channel belonging to the service type of "low-price products session", prompt information corresponding to the service type of "low-price products session" may be displayed in the first live stream channel.

In some embodiments, the prompt information may be displayed in the first live stream channel when the user enters the first live stream channel.

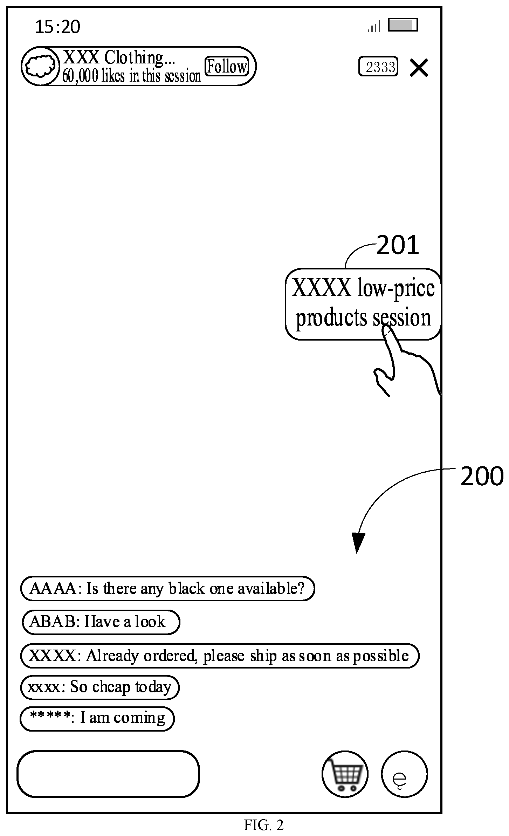

FIG. 2 is a schematic diagram of a first live stream channel according to some embodiments. As shown in FIG. 2, the prompt information 201 may be displayed in the first live stream channel 200 in the form of a floating window. It should be understood that the prompt information 201 may be content for describing that live stream channel attribute information meets a first preset condition. For example, assuming that a service type corresponding to the first live stream channel 200 is a service type of "XXXX low-price products session", the prompt information 201 may be text information of "XXXX low-price products session" accordingly.

Certainly, the prompt information may be displayed in the first live stream channel through other implementations, which will be specifically described in detail in subsequent implementations.

In step 120, a target page is displayed in the first live stream channel in response to a first trigger operation on the prompt information, where the target page includes a second live stream channel whose live stream channel attribute information meets the first preset condition.

Here, the first trigger operation on the prompt information may be a tap operation on the prompt information. When the electronic device detects a tap operation on the prompt information, the target page is displayed in the first live stream channel.

Exemplarily, a target page that occupies seven-tenths of a screen of the electronic device can be pulled up from the bottom of a live stream interface of the first live stream channel and is displayed. Certainly, a size of the target page may be selected based on an actual situation. For example, the target page may be a page with a size of the full screen of the electronic device, the target page may be a page that is half the size of the display screen of the electronic device, or the like.

The target page may include the second live stream channel whose live stream channel attribute information meets the first preset condition. In other words, the target page includes the second live stream channel whose live stream channel attribute information is consistent with the live stream channel attribute information of the first live stream channel and also meets the first preset condition. For example, in the case in which the live stream channel attribute information meeting the first preset condition means that the type of the live stream channel is the target type, the second live stream channel included in the target page is a live stream channel belonging to the same target type as the first live stream channel. In the case in which the live stream channel attribute information is a service type corresponding to the live stream channel, the second live stream channel included in the target page is a live stream channel belonging to the same target service type as the first live stream channel. It should be understood that the second live stream channel may be a live stream channel other than the first live stream channel that is currently performing live streaming.

The second live stream channel may be displayed in a form of a card on the target page. Each card may include, but is not limited to, information such as an image for describing the second live stream channel, a name of the second live stream channel, and/or the like. The image for describing the second live stream channel may be a cover used by the second live stream channel. Certainly, the image for describing the second live stream channel may alternatively be a real-time live stream image of the second live stream channel.

It is worth noted that a second live stream channel shown on each card in the target page may be understood as an entrance to the corresponding second live stream channel. The card allows the user to switch to the corresponding second live stream channel.

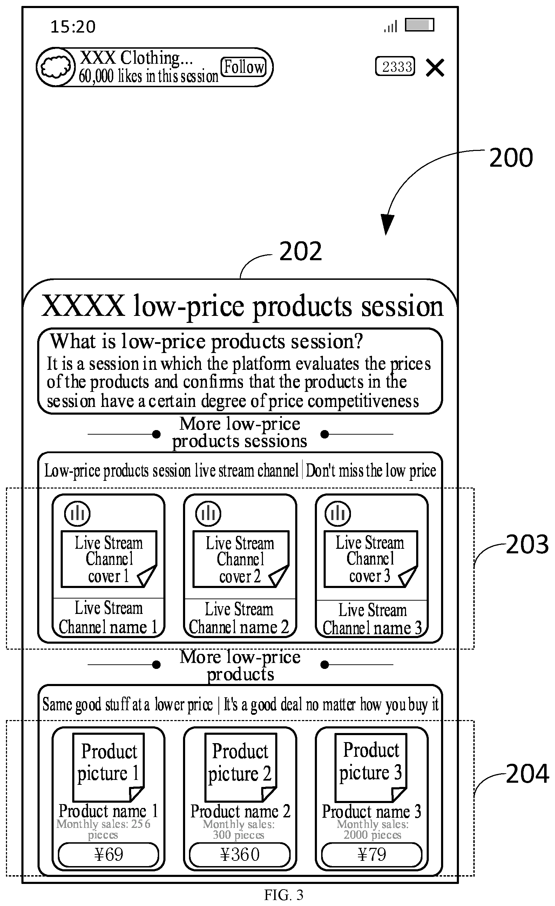

FIG. 3 is a schematic diagram of a target page according to some embodiments. As shown in FIG. 3, the target page 202 is displayed in the first live stream channel 200, and the target page 202 includes the second live stream channel 203. The second live stream channel 203 may be displayed in a form of a card on the target page 202.

As shown in FIG. 3, the first live stream channel 200 is a live stream channel belonging to the target service type of "XXXX low-price products session", and accordingly, the second live stream channel 203 included in the target page 202 is also a live stream channel belonging to the target service type of "XXXX low-price products session".

It is worth noted that a quantity of second live stream channels 203 displayed on the target page 202 may be set based on an actual situation. In addition, the target page 202 may display a hidden page portion in a slide manner.

In step 130, a target second live stream channel in the target page is displayed in response to a second trigger operation on the target second live stream channel.

Here, the second trigger operation on the target second live stream channel in the target page may be a tap operation on the target second live stream channel.

As shown in FIG. 3, the user may tap a card corresponding to "Live stream channel name 2" in FIG. 3 to trigger a second trigger operation on a target second live stream channel corresponding to "Live stream channel name 2".

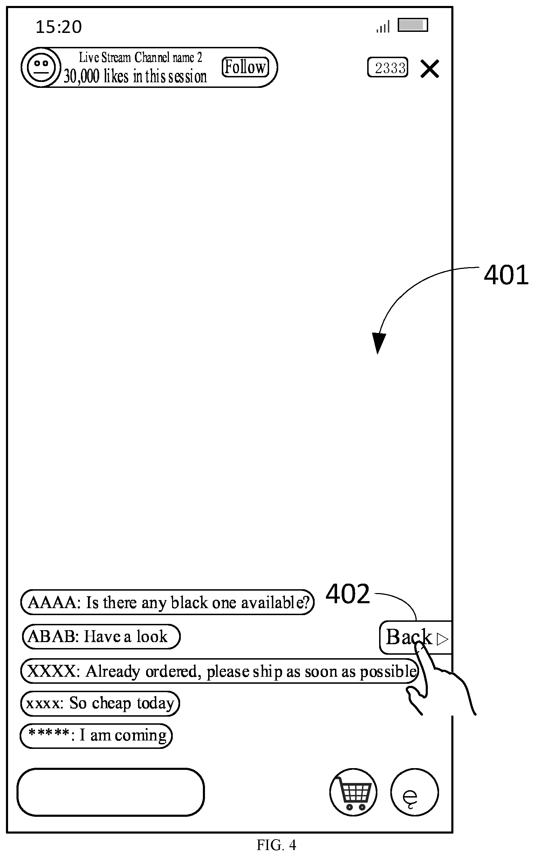

FIG. 4 is a schematic diagram of a target second live stream channel according to some embodiments. As shown in FIG. 4, when the user taps the card corresponding to "Live stream channel name 2" in FIG. 3, the screen jumps from the first live stream channel 200 shown in FIG. 3 to the target second live stream channel 401 shown in FIG. 4.

It should be understood that both the target second live stream channel 401 shown in FIG. 4 and the first live stream channel 200 shown in FIG. 3 are both live stream channels whose live stream channel attribute information meets the first preset condition. In other words, in the target second live stream channel 401 shown in FIG. 4, operations of displaying the prompt information and displaying the target page in response to a trigger operation on the prompt information may also be triggered.

It is worth noted that when jumping to display the target second live stream channel, prompt information may also be displayed in the target second live stream channel.

In this way, the prompt information is displayed in the first live stream channel; the target page that includes the second live stream channel is displayed in the first live stream channel in response to the first trigger operation on the prompt information; and then the target second live stream channel in the target page is displayed in response to the second trigger operation on the target second live stream channel. Therefore, the second live stream channel that belongs to the same type as the first live stream channel can be recommended to the user while the user is viewing a live stream, and the second live stream channel that belongs to the same type as the first live stream channel can be recommended to the user, without the user exiting the first live stream channel, such that the second live stream channel of the same type can be directly recommended to the user quickly and intuitively in a live stream interface of the first live stream channel, without interrupting the user viewing the first live stream channel. In addition, it is possible to enable the user to quickly switch, from being in the first live stream channel, to being in the second live stream channel that belongs to the same type, so as to switch directly from the first live stream channel to the second live stream channel that belongs to the same type, without the user having to exit the first live stream channel and without the user having to actively perform searching.

In some implementations that can be implemented, the target second live stream channel includes a back control for going back to the first live stream channel. When the back control is triggered, the electronic device performs an operation of going back from the target second live stream channel to the first live stream channel.

In some embodiments, the back control may be displayed in a first target region in the target second live stream channel. The first target region may be a blank region in the target second live stream channel, so as to avoid blocking content of the target second live stream channel. The first target region may alternatively be a region in the target second live stream channel for displaying bullet comments. The first target region may alternatively be a one-handed control region in the target second live stream channel to enable the user to quickly trigger the back control in the event of one-handed operation of the electronic device.

In some embodiments, the back control includes description information corresponding to the first live stream channel. The description information corresponding to the first live stream channel may be avatar information, live stream channel cover information, live stream channel name information, live stream channel real-time live streaming image information, and the like of the first live stream channel.

Accordingly, the electronic device may display the first live stream channel in response to a third trigger operation on the back control.

Here, the third trigger operation on the back control may be a tap operation on the back control. As shown in FIG. 4, the first live stream channel is displayed when the user taps a target control 402 displayed in a live stream interface of the target second live stream channel 401.

It is worth noted that if the user jumps, in the target second live stream channel, to a new second live stream channel through a target page corresponding to the target second live stream channel, the target second live stream channel is displayed if the user triggers a corresponding back control in the new second live stream channel; and the first live stream channel may be displayed if the user triggers a corresponding back control in the target second live stream channel.

It should be understood that when the first live stream channel is returned and displayed, the target page may no longer be displayed in the first live stream channel. In other words, when the first live stream channel is returned and displayed, content corresponding to the first live stream channel may be directly displayed, and the target page is no longer displayed.

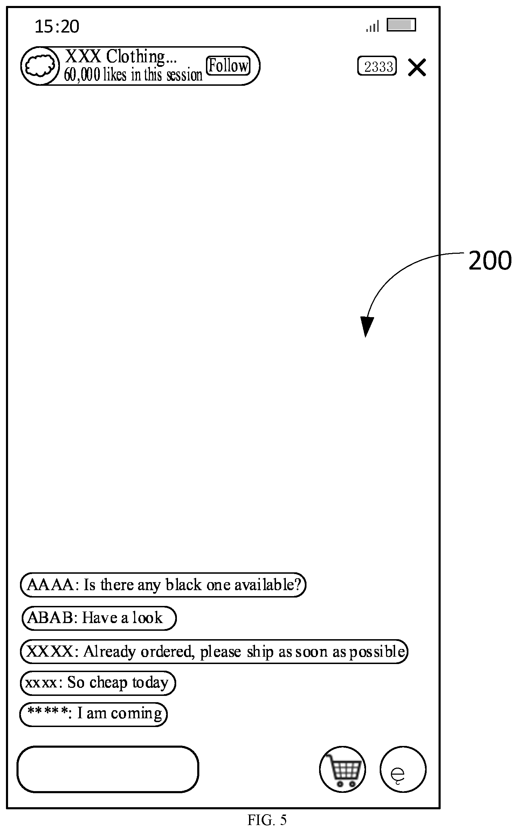

FIG. 5 is a schematic diagram of displaying the first live stream channel according to some embodiments. As shown in FIG. 5, when the user taps the target control 402 shown in FIG. 4, the first live stream channel 200 shown in FIG. 5 is displayed.

In this way, the back control enables the user to go back to the first live stream channel in the target second live stream channel, so that the user can quickly switch between live stream channels.

In some implementations that can be implemented, in step 110, a display page corresponding to a target control in the first live stream channel may be displayed in response to a fourth trigger operation on the target control, and the prompt information is displayed in a second target region.

Here, the target control is a control for obtaining a recommended object corresponding to the first live stream channel. The recommended object corresponding to the first live stream channel may be a product associated with the first live stream channel. In other words, the recommended object corresponding to the first live stream channel may be a product sold in the first live stream channel. Accordingly, the target control may mean that the first live stream channel includes a virtual shopping cart.

The display page includes object attribute information of the recommended object corresponding to the first live stream channel. If the recommended object is a product, the object attribute information of the recommended object may include, but is not limited to, a product price, a product image, a product name, and the like. In other words, the display page corresponding to the target control may be a product display page corresponding to the virtual shopping cart, and the product display page is used to display object attribute information of the product associated with the first live stream channel.

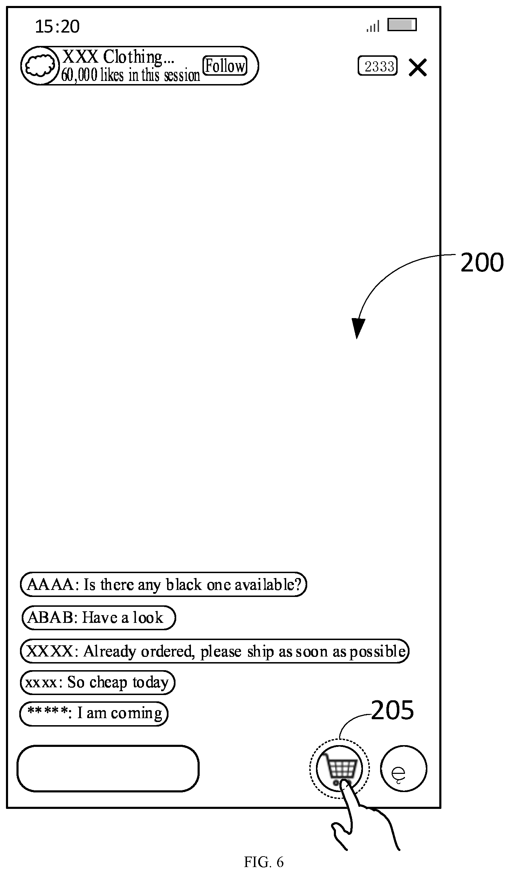

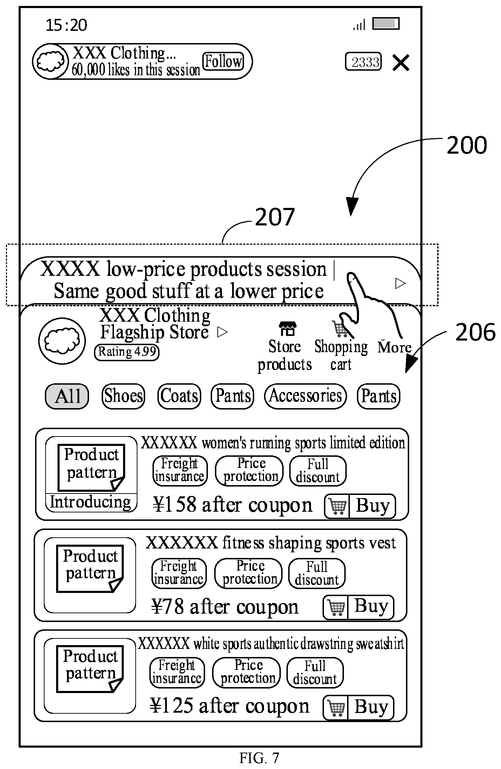

FIG. 6 is a schematic diagram of the first live stream channel according to some other embodiments. FIG. 7 is a schematic diagram of a product display page according to some embodiments. As shown in FIG. 6 and FIG. 7, the user may tap the virtual shopping cart 205 in the first live stream channel 200, the product display page 206 is displayed in the first live stream channel 200, and the product display page 206 includes prompt information 207. If the user taps the prompt information 207 in the product display page 206, the interface shown in FIG. 3 is displayed, that is, the target page 202 is displayed in the first live stream channel 200.

The second target region includes a region of the display page or a region that is in the first live stream channel and that is adjacent to the display page. In other words, the prompt information may be displayed in an internal region of the display page. The prompt information may alternatively be displayed in the region that is in the first live stream channel and that is adjacent to the display page.

It is worth noted that the prompt information is determined based on the live stream channel attribute information corresponding to the first live stream channel. If the live stream channel attribute information is a service type corresponding to a live stream channel, the prompt information may be information for describing a service type corresponding to the first live stream channel. For example, when the service type corresponding to the first live stream channel is a service type of "low-price products session", the prompt information may be information corresponding to the service type of "low-price products session". For example, as shown in FIG. 3, the prompt information may be "XXXX low-price products session".

In this way, the prompt information is displayed in the second target region, so that the user can quickly and intuitively understand the service type corresponding to the first live stream channel through the prompt information, and an atmosphere corresponding to the service type can be created in the first live stream channel.

In some implementations that can be implemented, the live stream channel attribute information includes a service type corresponding to a live stream channel and/or a service type corresponding to a recommended object of the live stream channel.

The service type corresponding to the live stream channel has been described in detail in the above implementation, and is not described in detail here.

The service type corresponding to the recommended object of the live stream channel may be a service type corresponding to a product associated with the live stream channel. In other words, the recommended object corresponding to the first live stream channel may be a product sold in the first live stream channel. Accordingly, the service type corresponding to the recommended object may be an activity type of the recommended object associated with the first live stream channel.

In some implementations that can be implemented, the first live stream channel may be determined as a live stream channel whose live stream channel attribute information meets the first preset condition when the service type corresponding to the live stream channel and/or the service type corresponding to the recommended object corresponding to the first live stream channel is the target service type, and the prompt information is displayed in the first live stream channel in response to determining that the first live stream channel is a live stream channel whose live stream channel attribute information meets the first preset condition.

Here, the service type corresponding to the live stream channel may be preconfigured by the staff. Certainly, in other embodiments, the service type corresponding to the live stream channel may be determined based on an association of the first live stream channel.

For example, when the recommended object is a product, recommended objects associated with the first live stream channel may be all products sold in the first live stream channel, and the object attribute of the recommended object may be a product price.

When a difference between a product price of a product associated with the first live stream channel and a target price of a product of the same category meets a preset threshold, or among all the products associated with the first live stream channel, a proportion of products, for which a difference between the product price and the target price of the product of the same category meets the preset threshold, in all the products is greater than or equal to a preset proportion threshold, the service type corresponding to the first live stream channel is determined as the target service type.

The product of the same category may be products that are sold on the Internet and belong to the same category as the product sold in the first live stream channel. The target price of the product of the same category may be a real-time lowest price or a historical lowest price of the product of the same category. The preset threshold may be an interval value. For example, the preset threshold may be (-∞, 0]. Certainly, the preset threshold may alternatively be another interval value.

It should be understood that the difference between the product price of the product associated with the first live stream channel and the target price of the product of the same category meeting the preset threshold represents that the price of the product sold in the first live stream channel is lower than or close to the lowest price of the product of the same category sold on the Internet. The live stream channel of the target service type represents that the product sold in the live stream channel is lower in price, more discounted, and more advantageous in price than other products of the same category.

The service type corresponding to the recommended object may be preconfigured by the staff. Certainly, in other embodiments, the service type corresponding to the recommended object may be determined based on an object attribute corresponding to the recommended object.

For example, when a difference between the product price of the product associated with the first live stream channel and the target price of the product of the same category meets a preset threshold, the service type corresponding to the product is determined as the target service type.

Certainly, the service type corresponding to the recommended object of the live stream channel may alternatively be a service type that accounts for the largest proportion of service types corresponding to recommended objects of the live stream channel. That is, all the recommended objects in the live stream channel may correspond to one service type, and the service type corresponding to the recommended objects in the live stream channel is a service type that accounts for the largest proportion among all service types.

It is worth noted that the target service type may be set based on an actual application scenario. The first live stream channel may be determined as a live stream channel whose live stream channel attribute information meets the first preset condition when the service type corresponding to the live stream channel and/or the service type corresponding to the recommended object corresponding to the first live stream channel is the target service type.

Therefore, by determining the first live stream channel as a live stream channel whose live stream channel attribute information meets the first preset condition when the service type corresponding to the live stream channel and/or the service type corresponding to the recommended object corresponding to the first live stream channel is the target service type, corresponding prompt information may be displayed in the first live stream channel of the target service type, so as to recommend the second live stream channel that is also of the target service type to the user.

It is worth noted that the prompt information displayed in the first live stream channel is added to the first live stream channel when the service type corresponding to the live stream channel and/or the service type corresponding to the recommended object corresponding to the first live stream channel is the target service type.

In some implementations that can be implemented, the target page further includes description content corresponding to the target service type.

Here, the description content corresponding to the target service type may be used to describe the target service type. Different target service types may correspond to different description content. The description content may be in a form of text, image, or the like.

For example, as shown in FIG. 3, in the case in which the target service type of the first live stream channel 200 is the service type of "XXXX low-price products session", the description content corresponding to the target service type may be text information of "What is low-price products session".

In other words, the target page may include not only the second live stream channel, but also the description content for describing the target service type.

Therefore, the description content can enable the user to intuitively understand the service type corresponding to the second live stream channel shown on the target page.

In some implementations that can be implemented, candidate live stream channels whose live stream channel attribute information meets the first preset condition may be determined from third live stream channels that are currently in a live stream state based on live stream channel attribute information corresponding to the third live stream channels. Then, the second live stream channel is determined based on live stream channel popularity values corresponding to the candidate live stream channels.

Here, the third live stream channels that are currently in the live stream state may be live stream channels that are currently performing live streaming. The third live stream channels may be live stream channels other than the first live stream channel that are currently in the live stream state.

Since the live stream channel attribute information meeting the first preset condition means that the service type corresponding to the live stream channel and/or the service type corresponding to the recommended object is the target service type, it is possible to select the candidate live stream channels from the third live stream channels based on the service type corresponding to the live stream channel and/or the service type corresponding to the recommended object. Then, the second live stream channel may selected from the candidate live stream channels based on the live stream channel popularity values corresponding to the candidate live stream channels. The live stream channel popularity value may be a recommendation level corresponding to the live stream channel in the dimension where the live stream channel attribute information meets the first preset condition.

The second live stream channel may be a candidate live stream channel whose live stream channel popularity value meets a second preset condition.

For example, the candidate live stream channels may be ranked in descending order of live stream channel popularity values of the candidate live stream channels, and a first target quantity of candidate live stream channels ranked at the top are determined as the second live stream channels. In other words, the live stream channel popularity value meeting the second preset condition may mean that the live stream channel popularity value is ranked at the top first target quantity. The first target quantity may be a value set as required. For example, the first target quantity may be 3.

Certainly, the live stream channel popularity value meeting the second preset condition may alternatively be another condition, for example, the live stream channel popularity value meeting the second preset condition may mean that the live stream channel popularity value is greater than a preset popularity value.

For example, the live stream channel popularity value corresponding to the candidate live stream channel may be determined based on live stream channel popularity information corresponding to the candidate live stream channel, evaluation of the live stream channel, or a price comparison level of a product associated with the live stream channel. Higher live stream channel popularity information indicates a higher live stream channel popularity value. Higher evaluation of the live stream channel indicates a higher live stream channel popularity value. A higher price comparison level indicates a higher live stream channel popularity value. The live stream channel popularity information may be determined based on a current quantity of likes in the live stream channel, a quantity of viewers, or the like. The evaluation of the live stream channel may be evaluation of a product sold in the live stream channel. More positive reviews indicate higher evaluation of the live stream channel. The price comparison level is a level to which a difference between the price of the product included in the live stream channel and a lowest price of a product of the same category belongs. For example, there may be multiple price comparison levels. A price comparison level corresponding to a product with a difference of less than or equal to 0 is the highest level, and then the difference represents a grading from cheap to expensive for a price relative to the lowest price of the product of the same category. In other words, a higher price comparison level represents that the price of the product is more favorable relative to the price of the product of the same category outside the platform.

Therefore, with the above implementations, at least one second live stream channel can be selected from the third live stream channels that are currently performing live streaming, to recommend the second live stream channel of the same category as the first live stream channel to the user.

In some implementations that can be implemented, the target page further includes a target recommended object, where the target recommended object is a recommended object whose service type matches the target service type.

Here, in addition to the second live stream channel, the target recommended object may also be included in the target page. As shown in FIG. 3, the target recommended object 204 may be displayed in the target page 202.

The target recommended object may be a product with a service type that is the target service type in products sold within the platform.

For example, the target recommended object may be displayed in the target page in a form of a card, and each card may include, but is not limited to, at least one of a product image of the target recommended object, a product name of the target recommended object, a price of the target recommended object, and a sales volume of the target recommended object. The product image of the target recommended object may be a product picture of the target recommended object or a product introduction video of the target recommended object.

It is worth noted that the target recommended object displayed on each card in the target page is equivalent to an entry for the corresponding target recommended object. The card allows the user to switch to a page of the corresponding target recommended object.

The target recommended object may be a product that is currently for sale on the platform and that belongs to the target service type. The target service type is the service type to which the first live stream channel belongs. For example, if the service type corresponding to the first live stream channel is a service type of "low-price products session", the target recommended object is also a product of the service type of "low-price products session". It should be understood that the target recommended object displayed in the target page may be a product of the target service type other than the recommendations associated with the first live stream channel. In other words, the product of the same category included in the first live stream channel may not be displayed on the target page.

In this way, the target recommended object is displayed in the target page, so that the product belonging to the same target service type can be recommended to the user while the user is watching a live stream.

In some implementations that can be implemented, if the target page includes target recommended objects, in response to a trigger operation on any target recommended object in the target page, a page of the any target recommended object on which the trigger operation is performed is displayed.

Here, as shown in FIG. 3, the user may tap the card corresponding to "Product name 3" in FIG. 3 to trigger a trigger operation on the target recommended object corresponding to "Product name 3".

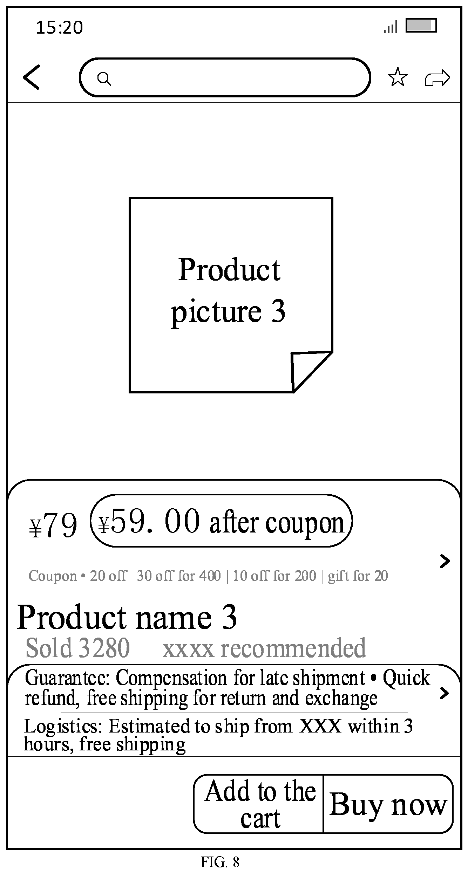

FIG. 8 is a schematic diagram of a page of a target recommended object according to some embodiments. As shown in FIG. 8, when the user can tap the card corresponding to "Product name 3" in FIG. 3, the first live stream channel 200 shown in FIG. 3 jumps to the page of the target recommended object belonging to "Product name 3" shown in FIG. 8, so that the user obtains the corresponding target recommended object in the page.

In some embodiments, the first live stream channel may be displayed and the target page is displayed in the first live stream channel, in response to a trigger operation indicating to exit a page of any target recommended object.

For example, the user may trigger an operation of exiting the page of the target recommended object by tapping a control, in the upper left corner of the page shown in FIG. 8, for going back to a previous interface.

When the user triggers a back operation in the page shown in FIG. 8, the user may return to the interface shown in FIG. 3. In other words, the interface shown in FIG. 3 is the previous interface of the product interface shown in FIG. 8. When the electronic device exits displaying of the page shown in FIG. 8, the interface shown in FIG. 3 may be displayed, to enable the user to select again a second live stream channel of interest or a target recommended object directly in the target page 202 shown in FIG. 3.

In some implementations that can be implemented, candidate recommended objects may be determined based on object attributes corresponding to recommended objects, and then the target recommended object is determined based on object popularity values corresponding to the candidate recommended objects.

Here, the recommended object may be a product currently on sale on the platform. The object attribute corresponding to the recommended object may be a product price corresponding to the product.

In some embodiments, a service type corresponding to a recommended object may be determined based on an object attribute corresponding to the recommended object, and a recommended object with a service type of the target service type is determined as a candidate recommended object based on the service types of respective recommended objects.

In a case in which the recommended object is a product, a candidate product of the target service type may be selected, from all products currently being sold on the platform, based on prices of the products currently being sold. For example, a service type corresponding to a product with a difference between a price of the product and a target price of a product of the same category meeting a preset threshold may be determined as the target service type.

The target recommended object may be a candidate recommended object whose object popularity value meets a third preset condition. The object popularity value may be an object recommendation level corresponding to the recommended object in the dimension in which the live stream channel attribute information meets the first preset condition.

For example, the candidate recommended objects may be ranked in descending order of object popularity values corresponding to the candidate recommended objects, and candidate recommended objects ranked at the top second target quantity may be used as the target recommended objects. The second target quantity may be a value set as required. For example, the second target quantity may be 3, 9, 15, 18, or the like.

An object popularity value corresponding to a candidate recommended object may be determined based on a price comparison level of the candidate recommended object, a praise rate of the candidate recommended object, quality of the candidate recommended object, and the like. A higher price comparison level indicates a higher object popularity value of the product. A higher praise rate indicates a higher object popularity value. Better quality indicates a higher object popularity value.

In this way, through the above implementation, the target recommended object belonging to the same category as the first live stream channel can be recommended to the user.

In some implementations that can be implemented, the target page may include a plurality of second live stream channels. Accordingly, the plurality of second live stream channels are displayed on the target page in a first order.

Here, the plurality of second live stream channels may be a first target quantity of second live stream channels selected through the above implementation.

The first order may be obtained by ranking the plurality of second live stream channels in descending order of live stream channel popularity values of the second live stream channels.

In other words, a second live stream channel with a higher live stream channel popularity value has a higher ranking in the target page.

In some implementations that can be implemented, the target page may include a plurality of target recommended objects. Accordingly, the plurality of target recommended objects are displayed on the target page in a second order.

Here, the plurality of target recommended objects may be a second target quantity of target recommended objects selected through the above implementation.

The second order may be obtained by ranking the plurality of target recommended objects in descending order of object popularity values corresponding to the target recommended objects.

In other words, a target recommended object with a higher object popularity value has a higher ranking in the target page.

The second live stream channels and the target recommended objects are displayed based on the first order and the second order as described above. In this way, the user can quickly select a second live stream channel and a target recommended object.

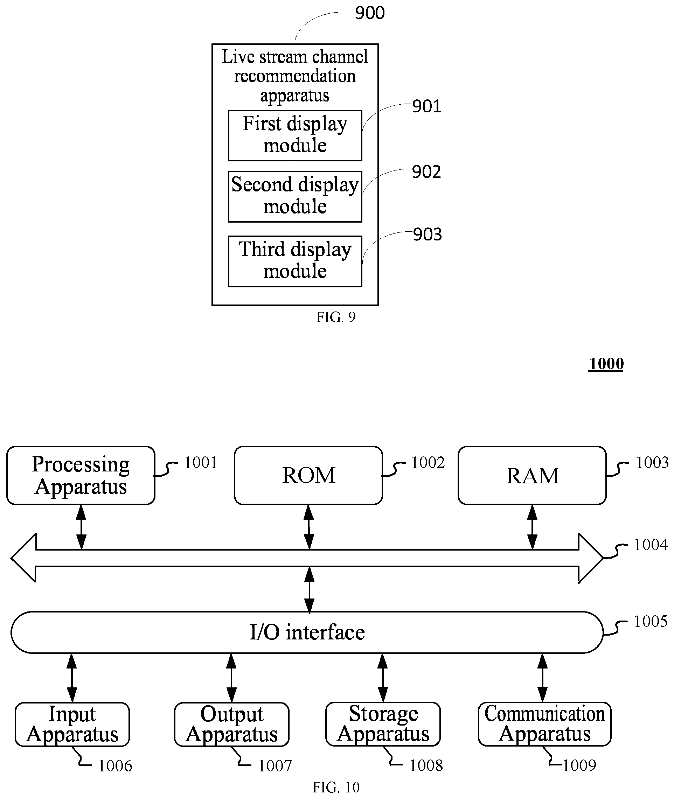

FIG. 9 is a schematic structural diagram of a live stream channel recommendation apparatus illustrated according to some embodiments. As shown in FIG. 9, embodiments of the present disclosure provide a live stream channel recommendation apparatus 900. The live stream channel recommendation apparatus 900 includes:
a first display module 901, configured to display prompt information in a first live stream channel, where the first live stream channel is a live stream channel whose live stream channel attribute information meets a first preset condition;
a second display module 902, configured to display a target page in the first live stream channel in response to a first trigger operation on the prompt information, where the target page includes a second live stream channel whose live stream channel attribute information meets the first preset condition; and
a third display module 903, configured to display a target second live stream channel in the target page in response to a second trigger operation on the target second live stream channel.

Optionally, the target second live stream channel includes a back control for going back to the first live stream channel, where the back control is displayed in a first target region of the target second live stream channel, and the back control includes description information corresponding to the first live stream channel. The live stream channel recommendation apparatus 900 further includes:
a first response module, configured to display the first live stream channel in response to a third trigger operation on the back control.

Optionally, the first display module 901 is specifically configured to:
display, in response to a fourth trigger operation on a target control in the first live stream channel, a display page corresponding to the target control, where the target control is a control for obtaining a recommended object corresponding to the first live stream channel, and the display page includes object attribute information of the recommended object corresponding to the first live stream channel; and
display the prompt information in a second target region, where the second target region includes a region of the display page or a region that is in the first live stream channel and that is adjacent to the display page, and the prompt information is determined based on the live stream channel attribute information corresponding to the first live stream channel.

Optionally, the live stream channel attribute information includes a service type corresponding to the live stream channel and/or a service type corresponding to a recommended object of the live stream channel. The first display module 901 is specifically configured to:
determine that the first live stream channel is a live stream channel whose live stream channel attribute information meets the first preset condition in response to the service type corresponding to the live stream channel and/or the service type corresponding to the recommended object corresponding to the first live stream channel being a target service type; and
display the prompt information in the first live stream channel in response to determining that the first live stream channel is a live stream channel whose live stream channel attribute information meets the first preset condition.

Optionally, the target page further includes description content corresponding to the target service type.

Optionally, the second display module 902 is specifically configured to:
determine, from third live stream channels that are currently in a live stream state, candidate live stream channels whose live stream channel attribute information meets the first preset condition, based on live stream channel attribute information corresponding to the third live stream channels; and
determine the second live stream channel based on live stream channel popularity values corresponding to the candidate live stream channels, where the second live stream channel is the candidate live stream channel whose live stream channel popularity value meets a second preset condition.

Optionally, the target page further includes a target recommended object, where the target recommended object is a recommended object whose service type matches the target service type.

Optionally, if the target page includes a plurality of second live stream channels, the plurality of second live stream channels are displayed on the target page in a first order, where the first order is obtained by ranking the plurality of second live stream channels in descending order of live stream channel popularity values of the second live stream channels.

If the target page includes a plurality of target recommended objects, the plurality of target recommended objects are displayed on the target page in a second order, where the second order is obtained by ranking the plurality of target recommended objects in descending order of object popularity values corresponding to the target recommended objects.

Functional logic executed by each functional module in the above live stream channel recommendation apparatus 900 has been described in detail in the part about the method, and details are not described herein again.

Reference is made to FIG. 10 below, which is a schematic structural diagram of an electronic device (such as a terminal device) 1000 suitable for implementing an embodiment of the present disclosure. A terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 10 is merely an example, and shall not impose any limitation on the function and scope of use of the embodiments of the present disclosure.

As shown in FIG. 10, the electronic device 1000 may include a processing apparatus (for example, a central processing unit or a graphics processing unit) 1001 that may perform a variety of appropriate actions and processing in accordance with a program stored in a read-only memory (ROM) 1002 or a program loaded from a storage apparatus 1008 into a random-access memory (RAM) 1003. The RAM 1003 further stores various programs and data required for the operation of the electronic device 1000. The processing apparatus 1001, the ROM 1002, and the RAM 1003 are connected to one another through a bus 1004. An input/output (I/O) interface 1005 is also connected to the bus 1004.

Generally, the following apparatuses may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the storage apparatus 1008 including, for example, a magnetic tape and a hard disk drive; and a communication apparatus 1009. The communication apparatus 1009 may allow the electronic device 1000 to perform wireless or wired communication with other devices to exchange data. Although FIG. 10 shows the electronic device 1000 having various apparatuses, it should be understood that it is not required to implement or have all of the shown apparatuses. It may be an alternative to implement or have more or fewer apparatuses.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program codes for performing the method shown in the flowchart. In such an embodiment, the computer program may be downloaded and installed from a network through the communication apparatus 1009, installed from the storage apparatus 1008, or installed from the ROM 1002. When the computer program is executed by the processing apparatus 1001, the abovementioned functions defined in the method of the embodiments of the present disclosure are performed.

It should be noted that the abovementioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program codes. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program codes contained in the computer-readable medium may be transmitted by any suitable medium, including but not limited to: electric wires, optical cables, radio frequency (RF), and the like, or any suitable combination thereof.

In some implementations, a terminal device or a server may communicate using any currently known or future-developed network protocol such as the HyperText Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The abovementioned computer-readable medium may be included in the abovementioned electronic device. Alternatively, the computer-readable medium may exist independently, without being assembled into the electronic device.

The computer-readable medium carries one or more programs that, when executed by the electronic device, cause the electronic device to: display prompt information in a first live stream channel, where the first live stream channel is a live stream channel whose live stream channel attribute information meets a first preset condition; display a target page in the first live stream channel in response to a first trigger operation on the prompt information, where the target page includes a second live stream channel whose live stream channel attribute information meets the first preset condition; and display a target second live stream channel in the target page in response to a second trigger operation on the target second live stream channel.

The computer program codes for performing the operations of the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program codes may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules described in the embodiments of the present disclosure may be implemented by software, or may be implemented by hardware. The names of the modules in a specific scenario do not constitute a limitation on the modules themselves.

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The abovementioned descriptions are merely preferred embodiments of the present disclosure and explanations of the applied technical principles. Those skilled in the art should understand that the scope of disclosure involved in the present disclosure is not limited to the technical solutions formed by specific combinations of the abovementioned technical features, and shall also cover other technical solutions formed by any combination of the abovementioned technical features or equivalent features thereof without departing from the abovementioned disclosed concept. For example, a technical solution formed by a replacement of the abovementioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the abovementioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims. With respect to the apparatus in the above embodiments, the specific manner in which each module performs an operation has been described in detail in the embodiments relating to the method, and will not be detailed herein.

## Claims

1. A live stream channel recommendation method, comprising:
displaying prompt information in a first live stream channel, wherein the first live stream channel is a live stream channel whose live stream channel attribute information meets a first preset condition;
displaying a target page in the first live stream channel in response to a first trigger operation on the prompt information, wherein the target page comprises a second live stream channel whose live stream channel attribute information meets the first preset condition; and
displaying, in response to a second trigger operation on a target second live stream channel in the target page, the target second live stream channel.

2. The method according to claim 1, wherein the target second live stream channel comprises a back control for going back to the first live stream channel, wherein the back control is displayed in a first target region of the target second live stream channel, and the back control comprises description information corresponding to the first live stream channel; and
the method further comprises:
displaying the first live stream channel in response to a third trigger operation on the back control.

3. The method according to claim 1, wherein the displaying the prompt information in the first live stream channel comprises:
displaying, in response to a fourth trigger operation on a target control in the first live stream channel, a display page corresponding to the target control, wherein the target control is a control for obtaining a recommended object corresponding to the first live stream channel, and the display page comprises object attribute information of the recommended object corresponding to the first live stream channel; and
displaying the prompt information in a second target region, wherein the second target region comprises a region of the display page or a region that is in the first live stream channel and that is adjacent to the display page, and the prompt information is determined based on the live stream channel attribute information corresponding to the first live stream channel.

4. The method according to claim 1, wherein the live stream channel attribute information comprises a service type corresponding to a live stream channel and/or a service type corresponding to a recommended object of a live stream channel, and displaying the prompt information in the first live stream channel comprises:
determining that the first live stream channel is a live stream channel whose live stream channel attribute information meets the first preset condition in response to the service type corresponding to the live stream channel and/or the service type corresponding to the recommended object corresponding to the first live stream channel being a target service type; and
displaying the prompt information in the first live stream channel in response to determining that the first live stream channel is a live stream channel whose live stream channel attribute information meets the first preset condition.

5. The method according to any one of claims 1 to 4, wherein determining the second live stream channel comprises:
determining, from third live stream channels that are currently in a live stream state, candidate live stream channels whose live stream channel attribute information meets the first preset condition, based on live stream channel attribute information corresponding to the third live stream channels; and
determining the second live stream channel based on live stream channel popularity values corresponding to the candidate live stream channels, wherein the second live stream channel is a candidate live stream channel whose live stream channel popularity value meets a second preset condition.

6. The method according to claim 4, wherein the target page further comprises a target recommended object, wherein the target recommended object is a recommended object whose service type matches the target service type.

7. The method according to claim 6, wherein in response to the target page comprising a plurality of second live stream channels, the plurality of second live stream channels are displayed on the target page in a first order, wherein the first order is obtained by ranking the plurality of second live stream channels in descending order of live stream channel popularity values of the second live stream channels; and
in response to the target page comprising a plurality of target recommended objects, the plurality of target recommended objects are displayed on the target page in a second order, wherein the second order is obtained by ranking the plurality of target recommended objects in descending order of object popularity values corresponding to the target recommended objects.

8. A live stream channel recommendation apparatus, comprising:
a first display module configured to display prompt information in a first live stream channel, wherein the first live stream channel is a live stream channel whose live stream channel attribute information meets a first preset condition;
a second display module configured to display a target page in the first live stream channel in response to a first trigger operation on the prompt information, wherein the target page comprises a second live stream channel whose live stream channel attribute information meets the first preset condition; and
a third display module configured to display, in response to a second trigger operation on a target second live stream channel in the target page, the target second live stream channel.

9. A computer-readable medium having a computer program stored thereon, wherein the computer program, when executed by a processing apparatus, implements the live stream channel recommendation method according to any one of claims 1 to 7.

10. An electronic device, comprising:
a storage apparatus having a computer program stored therein; and
a processing apparatus configured to execute the computer program in the storage apparatus to implement the live stream channel recommendation method according to any one of claims 1 to 7.
